Europäisches Patentamt

European Patent Office

Office européen des brevets

(11) Veröffentlichungsnummer : **0 103 111**
**B1**

# (12) EUROPÄISCHE PATENTSCHRIFT

(45) Veröffentlichungstag der Patentschrift :
28.05.86

(51) Int. Cl.⁴ : **E 06 B 3/66**

(21) Anmeldenummer : **83107083.4**

(22) Anmeldetag : **20.07.83**

(54) **Abstandhalterrahmen sowie Verfahren und Vorrichtung zur Herstellung der Verbindung hierfür.**

(30) Priorität : 09.09.82 DE 3233399

(43) Veröffentlichungstag der Anmeldung :
21.03.84 Patentblatt 84/12

(45) Bekanntmachung des Hinweises auf die Patenterteilung : 28.05.86 Patentblatt 86/22

(84) Benannte Vertragsstaaten :
**AT BE CH DE FR GB IT LI LU NL SE**

(56) Entgegenhaltungen :
DE-A- 2 457 472
DE-U- 7 825 704
DE-U- 7 933 613
US-A- 3 380 145

(73) Patentinhaber : **Helmut Lingemann GmbH & Co.**
**Am Deckershäuschen 62**
**D-5600 Wuppertal 1 (DE)**

(72) Erfinder : **Glaser, Siegfried**
**Am Kapellenberg 53**
**D-3472 Beverungen 1 (DE)**

(74) Vertreter : **Patentanwälte Dr. Solf & Zapf**
**Schlossbleiche 20 Postfach 13 01 13**
**D-5600 Wuppertal 1 (DE)**

**Beschreibung**

Die Erfindung betrifft aus Hohlprofilstücken zusammengesetzte Abstandhalterrahmen, die zur Herstellung von Isolierverglasungen verwendet werden. Sie betrifft ferner ein Verfahren und eine Vorrichtung zur Herstellung der Verbindung hierfür.

Abstandhalterrahmenprofile werden stückweise zu viereckigen Rahmen zusammengesetzt, wobei in der Regel in den Hohlraum der Profile ein Trockenmittel eingefüllt wird. Eckverbinder dienen dabei zum Zusammenstecken des Rahmens. Neuerlich sind Verfahren und Vorrichtungen entwickelt worden, mit denen Rahmenecken gebogen werden können, so daß ein Rahmen z. B. aus einem einzigen Profilstab oder aus lediglich zwei Profilstäben hergestellt werden kann (DE-AS 29 07 838 ; europäische Patentanmeldung 0003715 ; DE-GM 78 25 704). Die dabei aufeinanderstoßenden Kanten liegen in den geraden Rahmenteilen, so daß Eckverbinder entfallen.

Die Verbindung von Stoßkanten kann mittels Muffen erfolgen, die formschlüssig über die Stoßkantenbereiche gestülpt werden (DE-AS 29 07 838). Die Muffen bilden rahmenaußenseitig Kanten, die bei der Weiterverarbeitung des Rahmens zur Isolierverglasung stören. Außerdem müssen für im Querschnitt unterschiedliche Profile entsprechend unterschiedliche Muffen verwendet werden. Dies bedingt erhöhte Lagerhaltung. Die meisten bekannten Vorrichtungen zum Biegen eines Rahmens können zudem unterschiedliche Querschnitte der Profilstäbe verarbeiten und sind mit automatisch betriebenen, aufwendigen Zuführeinrichtungen für die Verbindungselemente bestückt. Die Zuführeinrichtungen sind jedoch immer nur zur Verarbeitung eines bestimmten Verbindertyps eingerichtet und müssen ausgewechselt werden, wenn auf der gleichen Vorrichtung Profile anderen Querschnitts verarbeitet werden sollen.

Eine andere Verbindungsart sieht eine gerade Verbindungseinrichtung vor, die etwa formschlüssig mit je einem Einsteckende in die stoßenden Rahmenteile eingeklebt ist, wobei die Einsteckenden Toleranzausgleichszungen und/oder Toleranzausgleichsbögen sowie im Bereich zwischen den Einsteckenden Klebermulden aufweisen (DE-GM 78 25 704). Für diese Verbindungsart gilt, daß das Verbindungsstück zwar keine außenseitigen Kanten bildet, dafür aber eine komplizierte Raumform besitzt. Ferner gilt in bezug auf die Verarbeitung verschiedener Abstandhalterrahmenprofile mit ein und derselben Maschine, daß auch in diesem Fall entsprechend unterschiedliche Raumformen der Verbindungsstücke und verschiedene Zuführeinrichtungen zur Verfügung stehen müssen. Welcher Kleber zum Verkleben der bekannten Verbindungsstücke mit dem jeweiligen Abstandhalterrahmenprofil verwendet werden soll, wird nicht angegeben.

Schließlich ist noch aus der US-PS 3,380,145 bekannt, Gehrungsöffnungen in einem Abstandhalterrahmenprofil mit einem Gummistopfen zu verschließen, dessen Querschnitt der Querschnittsform des Abstandhalterrahmenprofils angepaßt ist. Der Gummistopfen soll das Herausrieseln des Trockenmittels verhindern.

Aufgabe der Erfindung ist, eine Verbindung zwischen den Stoßkanten zweier vorzugsweise mit Trockenmittel gefüllter Abstandhalterrahmenprofile zu schaffen, die profilunabhängig schnell und einfach herstellbar ist. Aufgabe der Erfindung ist ferner, ein Verfahren und eine Vorrichtung zur Herstellung der Verbindung zu entwickeln.

Diese Aufgabe wird durch die Merkmale des Hauptanspruchs gelöst. Zweckmäßige Ausgestaltungen der Erfindung enthalten die Unteransprüche.

Anhand der Zeichnung wird die Erfindung beispielhaft näher erläutert. Es zeigen :

Figur 1 einen Längsschnitt durch die Verbindungsstelle zweier Abstandhalterrahmenprofile,

Figur 2 einen Längsschnitt durch die Verbindungsstelle zweier Abstandhalterrahmenprofile mit Vorrichtung zum Einspritzen des Klebemittels,

Figur 3 einen Querschnitt durch die Einspritzstelle mit Vorrichtung zum Einspritzen des Klebemittels,

Figuren 4 und 5 schematisch das Verfahren zur Herstellung einer erfindungsgemäßen Verbindung im geraden Schenkel eines Abstandhalterrahmens,

Figur 6 eine Verwirklichung der Erfindung im Bereich einer Rahmenecke.

Nach der Erfindung sind zwei an sich bekannte stabförmige Abstandhalterrahmenprofilstücke 1 und 2, die gerade oder in anderer Weise formschlüssig aneinandergesetzte Stoßkanten 3 aufweisen, miteinander verbunden, wobei diese Hohlprofile —wie an sich bekannt— mit Trockenmittel 4 gefüllt sein können. Die Abstandhalterrahmenprofilstäbe werden in Einheitslängen von mehreren Metern vom Hersteller geliefert und vom Isolierglashersteller zu einem Rahmen zusammengesetzt. Dabei kommt es vor, daß Überlängen und/oder zu kurze Stäbe vorliegen. Überlängen wurden bisher meist abgesägt und verworfen. Das Ansetzen von Teilstücken bei Unterlängen erfordert einen hohen Arbeits- oder apparativen Aufwand. Die Erfindung schafft insbesondere in diesem Zusammenhang für alle die Fälle Abhilfe, bei denen es zweckmäßig und erforderlich ist, Stabstücke miteinander zu verbinden oder aus Stabstücken gebogene Rahmenteile miteinander zu koppeln.

Demgemäß sieht die Erfindung vor, daß der Hohlraum neben den Stoßstellen 3 zweier Abstandhalterrahmenprofilstücke 1 und 2 mit einem einstückigen Stopfen 5 aus einem erhärteten Schmelzkleber ausgefüllt ist, wobei der Schmelzkleberstopfen an der Innenwandung der beiden Hohlprofile adhäsiv haftet und aufgrund seiner Kohäsionskraft eine derartige Verbindung der Profilstücke 1 und 2 gewährleistet, daß zumindest die Handhabung zur Herstellung eines Abstandhalterrahmens durchgeführt werden kann, ohne daß die Verbindung beeinträchtigt wird.

Im Falle, daß in den Hohlprofilen 1 und 2 Trockenmittel 4 vorhanden ist, kann zweckmäßigerweise vorgesehen sein, daß jedes Hohlprofil mit einem Pfropfen 6 aus einem plastischen oder elastischen Material verstopft ist, damit das Trockenmittel 4 bei der Handhabung der Profilstücke 1 und 2 nicht herausrieselt, wobei der Pfropfen 6 etwa 20 mm hinter der jeweiligen Stoßkante 3 angeordnet sein sollte.

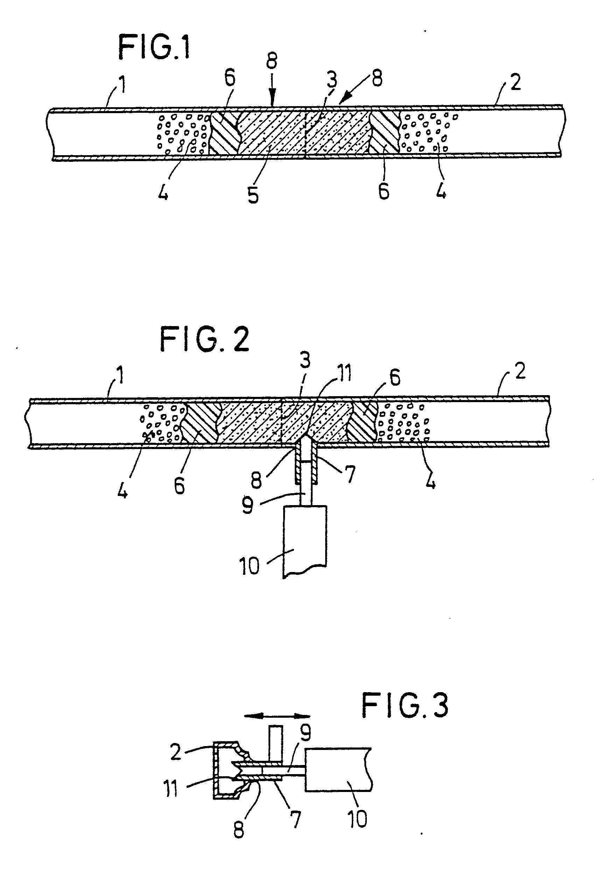

Die beschriebene erfindungsgemäße Verbindung gemäß Figur 1 wird hergestellt, indem mit einer Injektionskanüle 7 zumindest ein Loch 8 in eine Wandung eines Hohlprofilstabes 1, 2 eingebracht wird, wobei in der Kanüle 7 eine Düse 9 steckt bzw. angeordnet ist, die mit einer Schmelzklebertransportvorrichtung 10 in Verbindung steht, die in der Lage ist, flüssigen Schmelzkleber durch die Düse 9 zu drücken. Die Injektionskanüle 7, die die Düse 9 zweckmäßigerweise nach vorne hin um ein Stück überragt, besteht aus einem Material, das sehr viel härter ist als das Material der Profilstäbe 1 und 2. Z. B. besteht eine Kanüle 7 aus nicht rostendem Stahl, wenn die Profilstäbe 1 und 2 aus Aluminium oder dergleichen Leichtmetall bestehen. Vorzugsweise weist die Kanüle 7 mindestens eine messerscharfe Spitze 11 auf, die das Durchdringen der Wandung eines Profilstabes erleichtert.

Vorrichtungen zum Verspritzen von Schmelzklebern sind bekannt und brauchen nicht näher beschrieben zu werden. Diese Vorrichtungen sind jedoch für die erfindungsgemäß zu lösende Aufgabe nicht verwendbar gewesen, weil keine zweckmäßige Einrichtung bekannt war, mit der in die Wandung eines Hohlprofilstabes an beliebiger Stelle ein ausreichend großes Loch zum Einspritzen von flüssigem Schmelzkleber mit an sich bekannten Düsensystemen eingebracht werden kann. Mit einem überraschend einfachen Mittel, nämlich der Kombination einer an sich bekannten Einspritzdüse mit einer Injektionskanüle, löst die Erfindung dieses Problem.

Zur Verbindungsbildung werden die Hohlprofilstücke 1 und 2, in die vor ihrer Verwendung Pfropfen 6 eingesetzt worden sind, mit ihren Stoßkanten 3 gegeneinander gesetzt. Anschließend fährt die Injektionskanüle gegen eine Wandung eines Profilstabes und durchdringt die Wandung. Dann wird flüssiger Schmelzkleber durch die Düse und Kanüle in den Hohlraum gedrückt, wobei der Hohlraum zwischen den Pfropfen 6 zweckmäßigerweise vollständig ausgefüllt wird. Danach fährt die Kanüle aus dem Loch 8 heraus. Der Schmelzkleber erhärtet und gewährleistet durch seine Adhäsions- und Kohäsionskräfte die gewünschte Verbindung.

Selbstverständlich ist es auch möglich, gleichzeitig oder nacheinander sowohl in das Profil 1 als auch in das Profil 2 Schmelzkleber zu injizieren. Die Wahl der Arbeitsweise richtet sich nach der Menge des erforderlichen Klebstoffes und der Zeit, die für das Erstarren des Klebstoffes und das Einspritzen zur Verfügung steht. Zweckmäßig kann auch sein, ein Loch 8 in den Profilstab 1 einzustechen und durch das Loch 8 des Profilstabes 2 den Schmelzkleber einzuspritzen. Quillt der Schmelzkleber dabei aus dem Loch 8 des Stabes 1, kann dies ein Hilfsmittel sein zu erkennen, daß genügend Schmelzkleber eingefüllt ist.

Als Schmelzkleber wird vorzugsweise ein Einkomponentenkleber verwendet, z. B. ein Äthylenvinylacetatkleber mit einer Shore-Härte von 60 bis 80° im erhärteten Zustand. Der Kleber wird zweckmäßigerweise mit einer Viskosität von etwa 2 000 mPs bei 160 °C eingespritzt und sollte eine offene Zeit von etwa 2 Sekunden haben, nach der er ausreichend erhärtet ist, um die gewünschte Verbindung zu gewährleisten.

Nach einer besonderen Ausführungsform der Erfindung wird als Schmelzkleber ein Kleber auf Basis Copolyamid verwendet, wobei ein Verarbeitungsbereich von 180 bis 240 °C vorzugsweise gewählt wird.

Zweckmäßig ist, daß z. B. bei einem Abstandhalterprofilstab mit einem größten Wandungsabstand von etwa 10 mm ein Hohlraum von etwa 20 mm Tiefe jeweils neben der Stoßkante mit Schmelzkleber ausgefüllt wird.

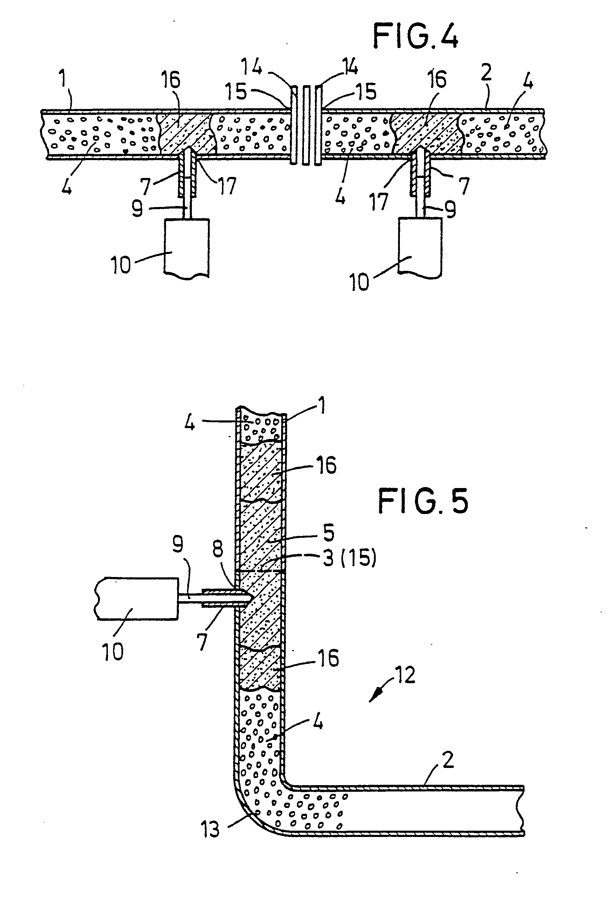

Bei der Herstellung eines Rahmens 12 mit gebogenen Ecken 13 kann die Erfindung mit besonderen Vorteilen angewendet werden (siehe Fig. 4 und 5). Wenn die Stablänge nicht auf die Rahmengröße abgestellt ist, was in der Regel der Fall ist, sind von den mit Trockenmittel 4 gefüllten Profilstäben 1 und 2 mit einer Säge 14 Teilstücke abzusägen. Nach der Erfindung wird vor dem Absägen z. B. etwa 20 mm vor der Schnittstelle 15 die Wandung der Stäbe 1 und 2 mit der Injektionskanüle 7 durchdrungen und Schmelzkleber durch das Loch 17 in das mit Trockenmittel 4 gefüllte Profil eingespritzt; dabei wird das lose eingefüllte Trockenmittel jeweils seitlich der Einspritzstelle verdrängt, so daß sich ein Pfropfen 16 bildet. Es kann aber auch ein Stopfen gebildet werden, der zumindest teilweise Trockenmittelgranulat enthält nach Art eines Mörtels, wenn keine vollständige Verdrängung des Trockenmittels möglich ist.

Anschließend erfolgt der Trennschnitt mit der Säge 14, wonach das Trockenmittel 4, das sich im Hohlraum zwischen der Schnittstelle 15 und dem Pfropfen 16 befindet, herausrieselt, während das Trockenmittel hinter dem Pfropfen 16 — wie beabsichtigt — abgeschlossen ist, und zwar luftdicht, so daß Luftfeuchtigkeit von der Schnittstelle 15 nicht an das Trockenmittel dringen kann.

Die beiden derart präparierten Stäbe 1 und 2 werden zur Rahmenbildung mit ihren Stoßkanten 3 (15) gegeneinander gesetzt. Dann fährt die Kanüle 7 gegen eine Wandung des Hohlraums zwischen den beiden Pfropfen 16 und durchdringt die Wandung. Anschließend wird Schmelzkleber eingespritzt, so daß sich der Verbindungsstopfen 5 bildet. Wenn die Kanüle aus dem Loch 8 gezogen und der Schmelzkleber nach kurzer Zeit erhärtet ist, ist die erfindungsgemäße Verbindung der beiden Abstandhalterrahmenhohlprofile 1 und 2 hergestellt, und zwar schnell und mit relativ einfachen Mitteln sowie mit geringem apparativen Aufwand.

Die erfindungsgemäße Verbindung gewährleistet vorzugsweise nicht nur den Zusammenhalt der aneinander gesetzten Rahmenstücke, sondern auch eine gasdichte Abdichtung an den Stoßstellen sowohl zum Innenraum der Profilrohre als auch vom Innenraum der Isolierverglasung nach außen.

Das beschriebene Verfahren eignet sich mit seinen grundsätzlichen Verfahrensschritten nicht nur zur Herstellung einer Verbindung zwischen den Stoßkanten zweier Abstandhalterrahmenhohlprofile, sondern auch zur Abdichtung und insbesondere auch Versteifung einer gebogenen Ecke.

Demgemäß ist Gegenstand der Erfindung auch eine gebogene Ecke und ein Verfahren zur Herstellung der Ecke, wobei zur Durchführung des Verfahrens sich die beschriebene erfindungsgemäße Vorrichtung gleichermaßen eignet.

Die erfindungsgemäße gebogene Ecke 13 ist z. B. hergestellt nach einem bekannten Verfahren (DE-AS 29 07 838, EP-OS 0 003 715, DE-GM 78 25 704, US-PS 3 380 145). Sofern vor dem Biegen eine Schwächezone im Biegebereich zur Erleichterung des Biegevorgangs, z. B. durch Einfräsungen oder Einschnitte oder Ausklinkungen oder dergleichen, vorgesehen ist, stellt die gebogene Ecke in der Regel eine Zone des Rahmens dar, die eine relativ geringe Steifigkeit aufweist ; eine hohe Steifigkeit des Rahmens ist jedoch für die Handhabung z. B. bei der Weiterverarbeitung zur Isolierverglasung erwünscht. Die Erfindung sieht demgemäß vor, in den Eckbereichen einen Stopfen zu injizieren. Der Stopfen versteift die Ecke und dichtet ggf. zum Innenraum der Verglasung noch offene Stellen, die von den Schwächungen bzw. Einfräsungen, Einschnitten, Ausklinkungen oder dergleichen stammen, zum Innenraum der Profilstäbe und zum Innenraum der Verglasung ab.

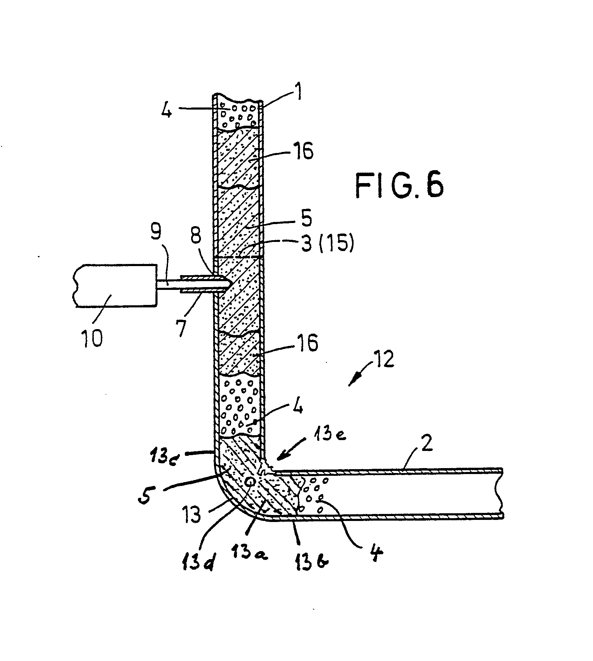

In Figur 6 ist z. B. eine gebogene Ecke 13 gezeigt, deren Hohlraum mit einem Stopfen 13a ausgefüllt ist, der sowohl den eigentlichen Eckraum als auch Teile der Schenkel 13b, 13c der Profilstäbe einnimmt. Die Länge des Stopfens richtet sich nach der gewünschten Versteifung ; ebenso richtet sich das verwendete injizierte Material nach der gewünschten Versteifung, indem ein Kleber verwendet wird, der nach der Erhärtung einen relativ festen, steifen Körper bildet.

Die Injektion kann durch die Außenseitenwandungen (Loch 13d) oder von außen durch die Außenwandung im Eckbereich erfolgen. Dabei soll vorzugsweise das Trockenmittel — wie bereits im Zusammenhang mit der Verbindung zweier Stoßkanten beschrieben — verdrängt werden. Insbesondere sollen die durch das Biegen eines mit Trockenmittel gefüllten Profilstabes im Eckbereich vorhandenen, durch Zerquetschen entstandenen Staubteile des Trockenmittels verdrängt und/oder durch den Klebstoff gebunden werden, so daß diese Staubanteile oder andere Trockenmittelteilchen nicht durch ggf. im Eckbereich nach dem Biegen verbleibende oder sich befindende, zum Innenraum der Verglasung oder durch die Seitenwandung führende Öffnungen 13e in den Innenraum der Verglasung rieseln und sich dort auf der Oberfläche der Scheiben niederschlagen können, was bisher der Fall war. Die Erfindung löst somit dieses Problem, für das es trotz des seit langem bekannten erheblichen Bedürfnisses noch keinen brauchbaren Lösungsweg gab, in verblüffend einfacher Weise.

Das Injizieren kann vor dem Biegen vorgenommen werden. Nach einer besonderen Ausführungsform der Erfindung erfolgt die Injektion aber erst nach dem Biegen. Dabei wird der Druck, mit dem der Schmelzkleber in den Hohlraum gepreßt wird, vorzugsweise so gewählt, daß der injizierte Schmelzkleber Einbuchtungen oder Einbeulungen wieder herausdrücken kann, die durch das Biegen der Ecke in den Wandungen des Hohlprofils entstanden sind und sich in den Innenraum erstrecken.

## Patentansprüche

1. Aus Hohlprofilstücken zusammengesetzte Abstandhalterrahmen, die zur Herstellung einer Isolierverglasung verwendbar und ggf. mit Trockenmittel gefüllt sind, wobei die Stoßkanten (3) zweier Hohlprofilstücke (1, 2) bündig gegeneinander gesetzt sind und ein einstückiger Verbindungskörper die Stoßkanten überbrückend formschlüssig im Hohlraum beiderseits der Stoßkanten sitzt, dadurch gekennzeichnet, daß der Verbindungskörper aus einem erhärteten Schmelzkleberstopfen (5) besteht, der durch eine Wandung in den Hohlraum eingespritzt ist.

2. Abstandhalterrahmen nach Anspruch 1, gekennzeichnet durch mindestens ein Spritzloch (8) neben einer Stoßkante (3).

3. Abstandhalterrahmen nach Anspruch 1 und/oder 2, dadurch gekennzeichnet, daß beiderseits neben dem Stopfen (5) ein Pfropfen (6, 16) sitzt.

4. Abstandhalterrahmen nach Anspruch 3, dadurch gekennzeichnet, daß der Pfropfen (6) aus einem elastischen oder plastischen Material besteht.

5. Abstandhalterrahmen nach Anspruch 3, dadurch gekennzeichnet, daß der Pfropfen (16) aus einem ggf. Trockenmittel enthaltenden Schmelzkleber besteht und in den Hohlraum eingespritzt ist.

6. Abstandhalterrahmen nach Anspruch 5, dadurch gekennzeichnet, daß im Bereich des Pfropfens (16) ein Spritzloch (17) in der Wandung des Hohlprofilstücks angeordnet ist.

7. Abstandhalterrahmen nach einem oder mehreren der Ansprüche 1 bis 6, dadurch gekennzeichnet, daß der Stopfen (5) und/oder der Pfropfen (16) aus einem Äthylenvinylacetatkleber besteht.

8. Abstandhalterrahmen nach Anspruch 7, dadurch gekennzeichnet, daß der Stopfen (5) und/oder der Pfropfen (16) eine Shore-Härte von 60 bis 80° aufweisen.

9. Abstandhalterrahmen nach einem oder mehreren der Ansprüche 1 bis 6, dadurch gekennzeichnet, daß der Stopfen (5) und/oder der Pfropfen (16) aus einem erhärteten Copolyamid besteht.

10. Verfahren zur Herstellung einer Verbindung für Abstandhalterrahmen nach einem oder mehreren der Ansprüche 1 bis 9, dadurch gekennzeichnet, daß mit einer Kanüle (7) die Wandung zumindest eines der Hohlprofilstücke (1, 2) durchstoßen und anschließend Schmelzkleber in den Hohlraum beiderseits der Stoßkanten (3) durch die Kanüle (7) eingespritzt wird.

11. Verfahren nach Anspruch 10, dadurch gekennzeichnet, daß ein Äthylenvinylacetat kleber mit einer Viskosität von etwa 2 000 mPs bei 160 °C und einer offenen Zeit von etwa 2 Sekunden eingespritzt wird.

12. Verfahren nach Anspruch 9, dadurch gekennzeichnet, daß ein Copolyamidkleber verwendet wird, der im Verarbeitungsbereich von 180 bis 240 °C injiziert wird.

13. Verfahren nach Anspruch 10 bis 12, dadurch gekennzeichnet, daß die Wandung eines mit Trockenmittel (4) gefüllten Hohlprofilstabes mit einer Injektionskanüle (7) durchstoßen wird und anschließend durch die Kanüle ein Schmelzkleber in den Stab gespritzt wird, so daß ein Pfropfen (16) gebildet wird, danach mit einer Säge (14) der Hohlprofilstab neben dem Pfropfen (16) durchgesägt wird, woraus die Stoßkante (15) resultiert, das Trockenmittel (4) aus dem Hohlraum zwischen Pfropfen (16) und Stoßkante (15) entfernt wird, dann die Stoßkante eines in gleicher Weise vorbereiteten Profilstabes gegen die Stoßkante des ersten Profilstabes gesetzt, im Anschluß daran mit der Kanüle (7) die Wandung eines der Hohlprofilstäbe neben der Stoßkante (15) durchdrungen und durch die Kanüle in den Hohlraum zwischen den beiden Stopfen (16) ein Schmelzkleber eingespritzt wird, wonach die Kanüle zurückgezogen wird und der Schmelzkleber zum Stopfen (5) erstarrt.

14. Vorrichtung zur Durchführung des Verfahrens nach einem der Ansprüche 10 bis 13, gekennzeichnet durch eine Injektionskanüle (7), in der axial eine Düse (9) steckt, die mit einer Schmelzklebertransportvorrichtung (10) in Verbindung steht.

15. Vorrichtung nach Anspruch 14, dadurch gekennzeichnet, daß die Injektionskanüle (7) die Düse (9) nach vorne hin um ein Stück überragt.

16. Vorrichtung nach Anspruch 14 und/oder 15, dadurch gekennzeichnet, daß die Kanüle (7) mindestens eine messerscharfe Spitze (11) aufweist.

17. Vorrichtung nach einem oder mehreren der Ansprüche 14 bis 16, dadurch gekennzeichnet, daß die Kanüle (7) aus nicht rostendem Stahl besteht.

18. Abstandhalterrahmen nach einer der Ansprüche 1 bis 9, mit gebogenen Ecken, dadurch gekennzeichnet, daß im Bereich der gebogenen Ecken je ein Stopfen aus einem erhärteten Schmelzkleberstopfen (5) durch eine Wandung in den Hohlraum eingespritzt ist.

19. Abstandhalterrahmen nach Anspruch 18, gekennzeichnet durch mindestens ein Spritzloch (13d) in den Seitenwandungen oder in der Außenwandung im Eckbereich.

20. Abstandhalterrahmen nach Anspruch 18 und/oder 19, dadurch gekennzeichnet, daß beiderseits neben dem Stopfen (5) ein Pfropfen (6, 16) sitzt.

21. Abstandhalterrahmen nach einem oder mehreren der Ansprüche 18 bis 20, dadurch gekennzeichnet, daß der Pfropfen (6) aus einem elastischen oder plastischen Material besteht.

22. Abstandhalterrahmen nach einem oder mehreren der Ansprüche 18 bis 20, dadurch gekennzeichnet, daß der Pfropfen (16) aus einem ggf. Trockenmittel enthaltenden Schmelzkleber besteht und in den Hohlraum injiziert worden ist.

23. Abstandhalterrahmen nach Anspruch 22, dadurch gekennzeichnet, daß im Bereich des Pfropfens (16) ein Spritzloch (17) in der Wandung des Hohlprofilstücks angeordnet ist.

24. Abstandhalterrahmen nach einem oder mehreren der Ansprüche 18 bis 23, dadurch gekennzeichnet, daß der Stopfen (5) und/oder der Pfropfen (16) aus einem Äthylenvinylacetatkleber besteht.

25. Abstandhalterrahmen nach Anspruch 24, dadurch gekennzeichnet, daß der Stopfen (5) und/oder der Pfropfen (16) eine Shore-Härte von 60 bis 80° aufweisen.

26. Abstandhalterrahmen nach einem oder mehreren der Ansprüche 18 bis 23, dadurch gekennzeichnet, daß der Stopfen (5) und/oder der Pfropfen (16) aus einem erhärteten Copolyamid bestehen.

27. Verfahren zur Herstellung einer Ecke von Abstandhalterrahmen nach einem oder mehreren der Ansprüche 18 bis 26, gekennzeichnet durch die Merkmale eines oder mehrerer der Ansprüche 10 bis 13.

28. Verfahren nach Anspruch 27, dadurch gekennzeichnet, daß mit dem Schmelzkleber beim Injizieren Einbeulungen, die beim Biegen der Ecke entstanden sind, wieder herausgedrückt werden.

**Claims**

1. Distance-holding frame composed of hollow sections which can be used for the production of an insulating glazing and are in some cases filled with drying agent, the butting edges (3) of two hollow sections (1, 2) being set flush one against the other and a one-piece joining element being seated in the cavity on either side of the butting edges, positively bridging the latter, characterised in that the joining element consists of a hardened hot-melt adhesive plug (5) which has been injected into the cavity through a wall.

2. Distance-holding frame according to claim 1, characterised by at least one injection hole (8) next to a butting edge (3).

3. Distance-holding frame according to claim 1 and/or 2, characterised in that there is a slug (6, 16) next to the plug (5) on either side.

4. Distance-holding frame according to claim 3, characterised in that the slug (6) consists of an elastic or plastic material.

5. Distance-holding frame according to claim 3, characterised in that the slug (16) consists of a hot-melt adhesive which in some cases contains a drying agent and has been injected into the cavity.

6. Distance-holding frame according to claim 5, characterised in that an injection hole (17) is arranged in the wall of the hollow section in the region of the slug (16).

7. Distance-holding frame according to one or more of claims 1 to 6, characterised in that the plug (5) and/or the slug (16) consist of an ethylene vinyl acetate adhesive.

8. Distance-holding frame according to claim 7, characterised in that the plug (5) and/or the slug (16) have a Shore hardness of 60 to 80°.

9. Distance-holding frame according to one or more of claims 1 to 6, characterised in that the plug (5) and/or the slug (16) consist of a hardened copolyamide.

10. Method for producing a connection for distance-holding frames according to one or more of claims 1 to 9, characterised in that the wall of at least one of the hollow sections (1, 2) is pierced by a cannula (7) and, subsequently, hot-melt adhesive is injected through the cannula (7) into the cavity on either side of the butting edges (3).

11. Method according to claim 10, characterised in that an ethylene vinyl acetate adhesive with a viscosity of about 2 000 mPs at 160 °C is injected and with an open time of about two seconds.

12. Method according to claim 9, characterised in that a copolyamide adhesive is used, which is injected in the processing range from 180 to 240 °C.

13. Method according to claims 10 to 12, characterised in that the wall of a hollow sectional rod filled with drying agent (4) is pierced by an injection cannula (7) and, subsequently, a hot-melt adhesive is injected through the cannula into the rod, so that a slug (16) is formed, thereafter the hollow sectional rod is sawn through with a saw (14) next to the slug (16), from which the butting edge (15) results, the drying agent (4) is removed from the cavity between slug (16) and butting edge (15), then the butting edge of a sectional rod prepared in the same way is set against the butting edge of the first sectional rod, after which the wall of one of the hollow sectional rods is penetrated with the cannula (7) next to the butting edge (15) and a hot-melt adhesive is injected through the cannula into the cavity between the two plugs (16), whereupon the cannula is withdrawn and the hot-melt adhesive solidifies into a slug (5).

14. Device for implementing the process according to one of claims 10 to 13, characterised by an injection cannula (7), in which a nozzle (9) fits axially and is in connection with a hot-melt adhesive transport device (10).

15. Device according to claim 14, characterised in that the injection cannula (7) projects a little forwards beyond the nozzle (9).

16. Device according to claim 14 and/or 15, characterised in that the cannula (7) has at least one knife-sharp tip (11).

17. Device according to one or more of claims 14 to 16, characterised in that the cannula (7) consists of a stainless steel.

18. Distance-holding frame according to one of claims 1 to 9, with bent corners, characterised in that, in the region of the bent corners, in each case a plug of a hardened hot-melt adhesive plug (5) is injected through a wall into the cavity.

19. Distance-holding frame according to claim 18, characterised by at least one injection hole (13d) in the side walls or in the outside wall in the corner region.

20. Distance-holding frame according to claim 18 and/or 19, characterised in that there is a slug (6, 16) next to the plug (5) on either side.

21. Distance-holding frame according to one or more of claims 18 to 20, characterised in that the slug (6) consists of an elastic or plastic material.

22. Distance-holding frame according to one or more of claims 18 to 20, characterised in that the slug (16) consists of a hot-melt adhesive which in some cases contains a drying agent and has been injected into the cavity.

23. Distance-holding frame according to claim 22, characterised in that, in the region of the slug (16), an injection hole (17) is arranged in the wall of the hollow section.

24. Distance-holding frame according to one or more of claims 18 to 23, characterised in that the plug (5) and/or the slug (16) consists of an ethylene vinyl acetate adhesive.

25. Distance-holding frame according to claim 24, characterised in that the plug (5) and/or the slug (16) has a Shore hardness of 60 to 80°.

26. Distance-holding frame according to one or more of claims 18 to 23, characterised in that the plug (5) and/or the slug (16) consist of a hardened copolyamide.

27. Method for producing a corner of spacer frames according to one or more of claims 18 to 26, characterised by the features of one or more of claims 10 to 13.

28. Method according to claim 27, characterised in that indentations which have occurred in bending of the corner during injection with the hot-melt adhesive are pressed out again.

**Revendications**

1. Châssis entretoise fait de l'assemblage de morceaux de profilés creux pouvant être utilisés pour la fabrication d'un vitrage isolant et pouvant le cas échéant être remplis d'un agent de déshydratation, les arêtes de contacts (3) des deux morceaux (1, 2) de profilé creux étant disposées en vis-à-vis, un corps d'assemblage d'une seule pièce chevauchant les arêtes de contact étant disposé dans la cavité de chaque côté des arêtes de contact, caractérisé en ce que le corps d'assemblage est constitué d'un bouchon (5) de colle à fusion durcie qui est injectée dans la cavité à travers une paroi.

2. Châssis entretoise selon la revendication 1, caractérisé en ce qu'il comporte au moins un trou d'injection (8) à côté d'une arête de contact (3).

3. Châssis entretoise selon la revendication 1 et/ou 2, caractérisé en ce qu'il comporte de chaque côté, contre le bouchon (5), un tampon (6, 16).

4. Châssis entretoise selon la revendication 3, caractérisé en ce que le tampon (6) est fait d'un matériau élastique ou plastique.

5. Châssis entretoise selon la revendication 3, caractérisé en ce que le tampon (16) est fait de colle à fusion contenant de l'agent de déshydratation et en ce qu'il est injecté dans la cavité.

6. Châssis entretoise selon la revendication 5, caractérisé en ce que la paroi du morceau de profilé creux comporte au niveau du tampon (16) un trou d'injection (17).

7. Châssis entretoise selon une ou plusieurs des revendications 1 à 6, caractérisé en ce que le bouchon (5) et/ou le tampon (16) est constitué d'une colle éthylène-vinyl-acétate.

8. Châssis entretoise selon la revendication 7, caractérisé en ce que le bouchon (5) et/ou le tampon (16) ont une dureté Shore de 60 à 80°.

9. Châssis entretoise selon une ou plusieurs revendications de 1 à 6, caractérisé en ce que le bouchon (5) et/ou le tampon (16) est constitué d'un copolyamide durci.

10. Procédé de fabrication d'une liaison pour châssis entretoise selon une ou plusieurs des revendications 1 à 9, caractérisé en ce qu'une canule (7) est enfoncée dans la paroi d'au moins un des morceaux de profilé creux (1, 2) et en ce qu'une colle à fusion est ensuite injectée dans la cavité de part et d'autre des arêtes de contact (3) par la canule (7).

11. Procédé selon la revendication 10, caractérisé en ce qu'une colle éthylène-vinyl-acétate ayant une viscosité d'environ 2 000 mPs et un temps ouvert de 2 secondes est injectée à une température de 160°.

12. Procédé selon la revendication 9, caractérisé en ce qu'une colle copolyamide est utilisée et en ce qu'elle est injectée dans la zone à traiter à une température comprise entre 180 et 240 °C.

13. Procédé selon une des revendications 10 à 12, caractérisé en ce qu'une canule (7) est enfoncée dans la paroi d'une barre profilée creuse contenant un agent de déshydratation (4) et en ce qu'ensuite une colle à fusion est injectée par la canule dans la barre de façon qu'il se constitue un tampon (16), la barre profilée creuse étant ensuite sciée au moyen d'une scie (14) à côté du tampon (16), opération dont il résulte des arêtes de contact (15), l'agent de déshydratation (4) étant chassé de la cavité située entre le tampon (16) et l'arête de contact (15), l'arête de contact d'une barre profilée préparée de la même manière étant ensuite placée en vis-à-vis de l'arête de contact de la première barre profilée, une canule (7) étant ensuite enfoncée dans la paroi de l'une des barres profilées creuses à côté des arêtes de contact (15) et une colle à fusion étant injectée dans la cavité située entre les 2 tampons (16), après quoi la canule est retirée et la colle à fusion se solidifie en un bouchon (5).

14. Dispositif pour la mise en œuvre du procédé selon une des revendications 10 à 13, caractérisé en ce qu'il comporte une canule d'injection (7) dans laquelle est enfichée axialement une buse (9) et à laquelle est assujetti un dispositif d'approvisionnement en colle à fusion (10).

15. Dispositif selon la revendication 14, caractérisé en ce que la canule d'injection (7) fait saillie sur l'avant de la buse (9).

16. Dispositif selon la revendication 14 et/ou 15, caractérisé en ce que la canule (7) comporte au moins une pointe acérée (11).

17. Dispositif selon une ou plusieurs des revendications 14 à 16, caractérisé en ce que la canule (7) est faite d'acier inoxydable.

18. Châssis entretoise selon une des revendications 1 à 9 comportant des coins cintrés, caractérisé en ce que, au niveau des coins cintrés, un bouchon (5) fait d'une colle à fusion est injecté à travers la paroi dans la cavité.

19. Châssis entretoise selon la revendication 18, caractérisé en ce qu'il comporte au moins un trou d'injection (13d) sur ses parois latérales ou sur sa paroi extérieure au niveau du coin.

20. Châssis entretoise selon la revendication 18 et/ou 19, caractérisé en ce qu'un tampon (6, 16) est disposé de part et d'autre et contre le bouchon (5).

21. Châssis entretoise selon une ou plusieurs des revendications 18 à 20, caractérisé en ce que le tampon (6) est fait d'un matériau élastique ou plastique.

22. Châssis entretoise selon une ou plusieurs des revendications 18 à 20, caractérisé en ce que le tampon (16) est fait d'une colle à fusion contenant un agent de déshydratation et en ce qu'il est injecté dans la cavité.

23. Châssis entretoise selon la revendication 22, caractérisé en ce qu'un trou d'injection (17) est percé dans la paroi du morceau de profilé creux au niveau du tampon (16).

24. Châssis entretoise selon une ou plusieurs des revendications 18 à 23, caractérisé en ce que le bouchon (5) et/ou le tampon (16) est fait d'une colle éthylène-vinyl-acétate.

25. Châssis entretoise selon la revendication 24, caractérisé en ce que le bouchon (5) et/ou le tampon (16) ont une dureté Shore de 60 à 80°.

26. Châssis entretoise selon une ou plusieurs des revendications 18 à 23 caractérisé en ce que le bouchon (5) et/ou le tampon (16) est constitué d'un copolyamide durci.

27. Procédé de fabrication d'un coin de châssis entretoise selon une ou plusieurs des revendications 18 à 26, caractérisé par les caractéristiques d'une ou plusieurs des revendications 10 à 13.

28. Procédé selon la revendication 27, caractérisé en ce que les bossellements produits lors du cintrage des coins sont repoussés par l'injection de la colle à fusion.

# FIG.1

# FIG.2

# FIG.3

FIG.4

FIG.5

FIG.6